# EUROPEAN PATENT SPECIFICATION

(11) **EP 3 033 390 B1**
(45) Date of publication and mention of the grant of the patent: **22.02.2023**
(21) Application number: 13748020.8
(22) Date of filing: 12.08.2013
(51) Int. Cl.: C08L 23/12, C08L 23/14

(54) **THERMOPLASTIC BLEND FORMULATIONS FOR CABLE INSULATIONS**
FORMULIERUNG ZUR KABELISOLATION
FORMULATION POUR ISOLATION DES CABLES

(43) Date of publication of application: 22.06.2016
(73) Proprietor: NKT HV Cables AB, 371 60 Lyckeby (SE)
(72) Inventor: HO, Chau-Hon, 79540 Lörrach (DE); GHOUL, Cherif, 27601 Raleigh, NC (US); DOMINGUEZ, Gustavo, 11500 Montevideo (UY); JEDENMALM, Anneli, S-117 60 Stockholm (SE); FRIBERG, Andreas, S-174 62 Sundbyberg (SE); KRIVDA, Andrej, CH-5430 Wettingen (CH); XIE, Lei, 5507 Mellingen (CH); FARKAS, Andreas, S-444 41 Stenungsund (SE)
(74) Representative: Kransell & Wennborg KB
(86) International application number: PCT/EP2013/066788
(87) International publication number: WO 2015/022003

(56) References cited:
- EP-A1- 1 881 507
- WO-A1-2011/080151
- WO-A1-2012/174712

## Description

### Field of the invention

The present invention relates to a polymer composition suitable for the manufacture of an electrical insulation layer - in particular for the manufacture of insulation layers for cables - having superior mechanical and electrical properties and being environmentally friendly. Moreover, the present invention is also directed to a process for producing the insulation layer, and to the use of the polymer composition as an electrical insulation layer. Further, the present invention refers to a cable comprising the insulation layer made of the inventive polymer composition as well as to a process for the manufacture of the cable comprising the invented polymer composition in the form of one or more insulation layer(s). Also, the present invention is concerned with the use of the polymer composition for low, medium and/or high voltage (HV) insulations as well as for both direct current (DC) or alternating current (AC) transmission or distribution.

### State of the art

Metallic conductors or semi-conductive substrates used in power cables - hereinafter cables - and other electrical devices are electrically insulated by extruding insulating materials over the metallic conductor or the semi-conductive substrate. In this regard, a power cable is generally understood to be a cable which is able to transmit a power above 100 MW. Moreover, a voltage above 35 kV is generally understood to be a high voltage. A voltage below 35 kV and above 1 kV is generally understood to be a medium voltage. Accordingly, a voltage below 1 kV is generally understood to be a low voltage. A semi-conductive sheathing material is understood to be a material whose conductivity is above 10⁻⁸ S/m at 20°C. Thus, the term semi-conductive includes conductive materials of conductivities as high as, e.g., 10⁸ S/m. In particular, semi-conductive materials have a conductivity of more than 10⁻⁵ S/m, e.g. between 10⁻⁵ S/m and 10⁻⁴ S/m at 20°C.

As insulating materials, polymeric materials such as ethylene or propylene polymers, copolymers such as propylene-ethylene co-polymers, as well as diene terpolymers (EPDM) having a polyethylene-type crystallinity have been utilized. Particularly ethylene polymers have been used as insulation and semiconducting shields due to an easy processability and their beneficial electrical properties. For instance, standard MV and HV cables are commonly operated at about 70°C for DC transmissions and at up to 90°C for AC transmissions.

However, although the above-mentioned standard polymeric materials show sufficient insulating properties for low and medium voltage cables, they have several drawbacks when being used in high voltage cables.

For insulating high voltage cables, polymeric materials are desired which exhibit a high melting point since an increased power transmission (as it is the case in high voltage cables) leads to an increase of operating temperatures which may lead to softening or even melting of the insulation material. At the same time, similar to low and medium voltage cables, high voltage cables also require high flexibility for a better mechanical handling of the cable. In particular, when rolled and stored on a large cable drum usual tensile deformations of up to 5% are applied on large HV cables. Therefore, no permanent plastic deformation and yielding should occur up to 5 % deformation and linear elasticity with linear stress-strain behaviour is required.

However, the above-mentioned standard polymeric materials either have a high melting point or a low elastic modulus since, for the same type of polymer, a higher melting temperature is generally correlated with a higher crystallinity and/or higher intermolecular interactions and therefore with higher rigidity, i.e. a decreased flexibility. This is for instance the case for high density polyethylene (HDPE) or i-PP which have a high melting / softening point (onset) of 145 °C and 165 °C, respectively, while, at the same time, both HDPE and i-PP have a rather high Young's modulus of more than 1.0 GPa and 1.5 GPa, respectively, and a limit of linear elasticity at 1-2 % deformation. In view of the above, it becomes evident that standard polymeric materials do not meet the mechanical properties desired for high voltage cables.

An option as cable insulation for high voltage cables are cross-linked polyethylene materials which provide a satisfactory mechanical performance even under heating in continuous use and under conditions of current overload while at the same time maintain a high level of flexibility. In this regard, cross-linked low-density polyethylene (LDPE) (abbreviation: XLPE or PEX) fulfills the high flexibility requirements for high voltage cables with a Young's modulus of lower than 200 MPa and linear elasticity limit of 12-14 %. Accordingly, XLPE is widely used in the state of the art as insulation material for high voltage cables.

However, cross-linking of polyethylene (in order to obtain XLPE) is carried out during extrusion in the cable manufacturing process for example by using dicumylperoxide (DCP). This modification is required in order to improve thermo-mechanical properties since LDPE has a rather low melting point of around 115 °C. With XLPE, it is possible to achieve a rated maximum conductor temperature of 90 °C and a 250 °C short circuit rating - as required for standard HVAC applications while at the same time maintaining a low modulus of 0.1-0.2 GPa.

The drawback of DCP cross-linked polyethylene is the generation of polar volatile by-products. However, as shown by Yutao, Z.; Ho Gyu, Y.; Suh, K. S. Dielectrics and Electrical Insulation, IEEE Transactions on 1999, 6, 164-168 and Farkas, A.; Olsson, C. O.; Dominguez, G.; Englund, V.; Hagstrand, P.-O.; Nilsson, U. H. Development of high performance polymeric materials for HVDC cables; 2011 8th International Conference on Insulated Power Cables, Jicable 2011, such polar by-products derived from DCP increase the conductivity of the insulating material. In particular, these species impair electrical insulation properties such as space charge behaviour at very high voltages and limit the use as insulation material. Particularly for DC applications used in voltage ranges higher than 320 kV, low electrical conductivity is crucial in order to avoid thermal runaway effect and pre-mature breakdown as shown by Nussin, N.; Chen, G.; space charge accumulation and conductivity of crosslinking byproducts soaked LDPE; Electrical Insulation and Dielectric Phenomena (CEIDP): 2010 Annual Report Conference, 17-20 Oct. 2010, 1-4.

A further disadvantage of XLPEs is that cross-linked products are generally difficult to recycle. Namely, should the cable have reached the end of its operational lifetime, this results in the whole cable having to be disposed of.

In view of the above, it is an object of the present invention to overcome the above-discussed disadvantages and to provide a thermoplastic composition, particularly for use as an insulation layer for medium and high voltage cables that have both high thermal form stability and high mechanical stability, as well as low conductivity and high electrical break down strength, and which at the same time does not exhibit the drawbacks of XLPEs.

### Description of the invention

As a result of intensive studies conducted taking the above described problems into consideration, the present inventors were surprised to find that in mixing an ethylene-propylene copolymer having a specific ethylene/propylene ratio and an isotactic propylene polymer (i-PP), a polymer composition is provided which exhibits superior mechanical and electrical properties, such as high thermal form-stability and mechanical flexibility, as well as low conductivity and high electric breakdown strength and which is usable for insulation of electric cables, especially HV DC cables.

An aspect of the present invention relates to a polymer composition comprising
- an ethylene-propylene copolymer comprising from 70 to 90% by weight propylene and from 10 to 30% by weight ethylene, based on the total weight of the ethylene-propylene copolymer, and
- an isotactic propylene homopolymer, wherein

the weight ratio of the ethylene-propylene copolymer to the isotactic propylene homopolymer ranges from 90: 10 to 10:90, wherein
the polymer composition has a softening temperature according to the Vicat method based on ASTM-D1525 of more than 140°C and a Young's modulus determined according to ISO 527-2 of less than 1200 MPa, and wherein
the polymer composition has DC electrical breakdown strength at room temperature determined according to ASTM D149-87 of higher than 350 kV/mm, and
wherein the ethylene-propylene copolymer has an average ethylene block length of 1.0 to 1.5 monomer units, and the ethylene-propylene copolymer has an average propylene block length of 5.0 to 10.0 monomer units.

In particular, the inventive polymer composition has an overall isotactic polypropylene (i-PP) character exhibiting a high melting temperature but - compared to neat-i-PP - a much reduced stiffness with a lower Young's modulus and increased linear elasticity limit. Furthermore, the blend exhibits superior electrical properties such as low conductivity, high breakdown strength and good space charge behavior attributable to the absence of phase separation.

Moreover, in contrast to other "flexibilized polypropylene blends" the inventive polymer composition exhibits an extremely high compatibility of the two applied base polymers (i.e. i-PP and ethylene-propylene copolymer) resulting in a highly homogenous material. Therefore, any phase separation as observed widely for other "flexibilized polypropylene blends" does not occur after cooling from molten state - even at very low cooling rates. Nevertheless, breakdown strength improved at even lower cooling rates with absence of phase separation.

This is highly unexpected since thermoplastic polymer blends (such as "flexibilized polypropylene blends") typically suffer from incompatibility of the components and micro-scale phase separation phenomena which may dramatically impair the material properties - in particular electrical breakdown strength.

The inventive polymer composition comprising the above-mentioned blend stands out with superior mechanical and electrical properties such as high thermal form-stability and mechanical flexibility as well as low conductivity and high electric breakdown strength and is highly usable for insulation of electric cables, in particular HV cables, in particular for HV DC cables.

In the following, if not otherwise defined, "% by weight" refers to the total weight of the respective entity (e.g. the total weight of the ethylene-propylene copolymer or the total weight of the polymer composition). Furthermore, if not otherwise stated, all measurements were carried out at room temperature.

### Brief description of the Figures

The details will be described in the following with reference to the figures.

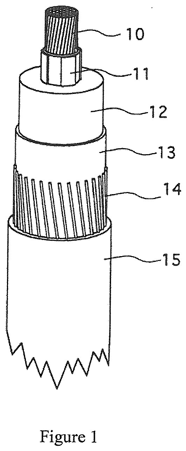

Figure 1 is an example of a cable structure according to the present invention.

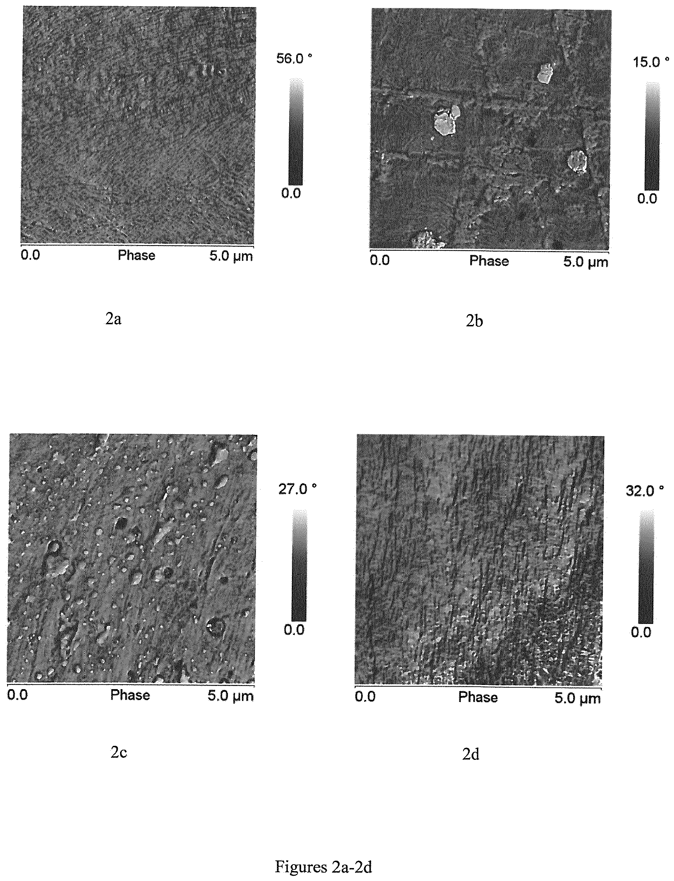

Figures 2a-2g show measurements/graphs concerning phase separation occurrence of i-PP (2a), Versify 2200^{®} (2b), Versify 3000 ^{®} (2c), SC820CF^{®} (2d), i-PP/SC820CF^{®} in a ratio of 50:50 (2e), i-PP/Versify 2200^{®} in a ratio of 70:30 (2f) and i-PP/Versify 3000^{®} in a ratio of 70:30 (2g), measured via AFM/SEM/optimized microscopy.

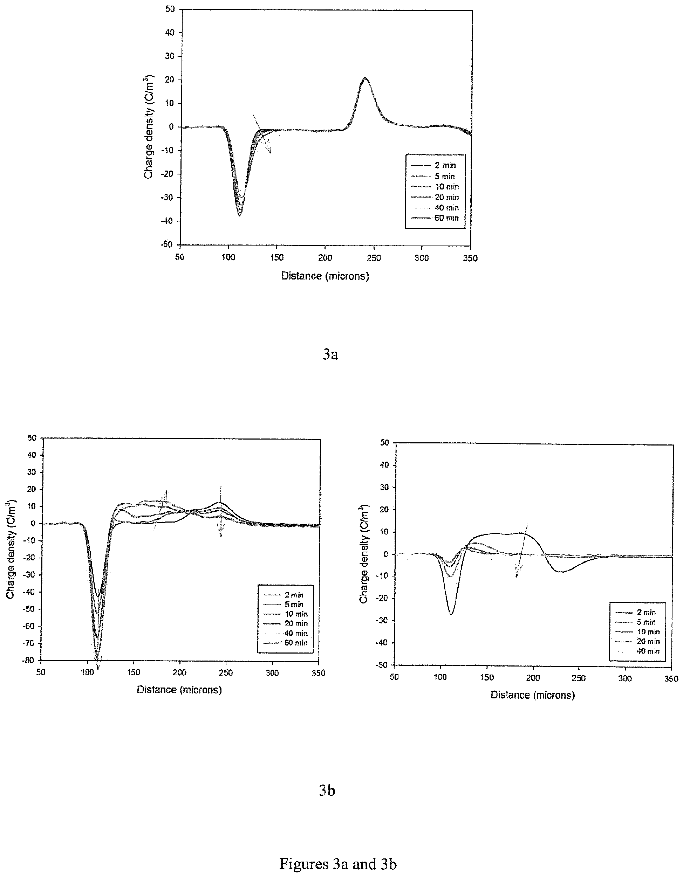

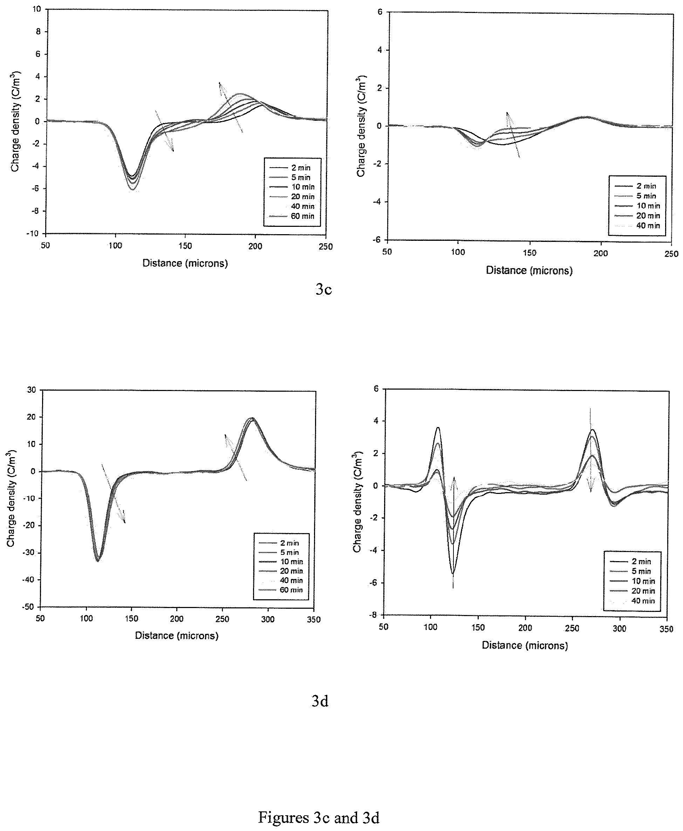

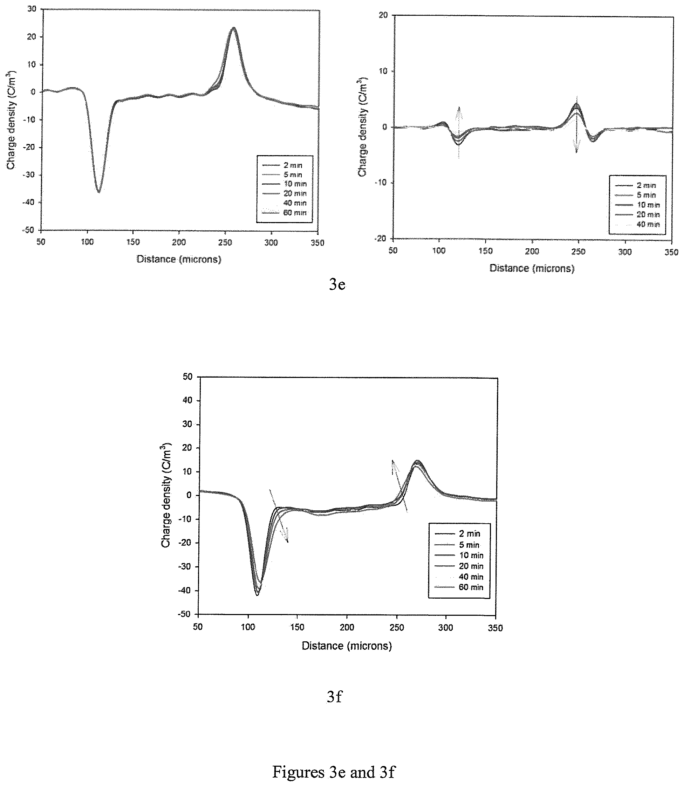

Figures 3a-3f show measurements/graphs (charging left, decay right) concerning space charge measurements of i-PP (3a), Versify 2200^{®} (3b), Versify 3000^{®} (3c), SC820CF^{®} (3d), i-PP/SC820CF^{®} in a ratio of 50:50 (3e) and i-PP/Versify 2200^{®} in a ratio of 70:30 (3f). Data with respect to i-PP/Versify 3000^{®} in a ratio of 70:30 were not measurable.

### Detailed description of aspects of the present invention

Reference will now be made in detail to various aspects of the invention and embodiments. Each aspect is provided by way of explanation and is not meant as a limitation. For example, features illustrated or described as part of one aspect or embodiment can be used on or in conjunction with any other aspect or embodiment to yield yet a further aspect or embodiment. It is intended that the present disclosure includes any such combinations and variations.

### Ethylene-propylene copolymer

According to the invention, the ethylene-propylene copolymer comprises from 70 to 90% by weight, most preferably from 80 to 89% by weight propylene, and from 10% to 30% by weight most preferably from 11 to 20% by weight ethylene, based on the total weight of the ethylene-propylene copolymer. This means that the ethylene-propylene copolymer according to the present invention has a higher content of ethylene compared to state of the art ethylene-propylene copolymers used as insulating material. Due to the high ethylene content the overall crystallinity dominated by the propylene rich phase is decreased. However, the ethylene content is limited and low enough to avoid separation of ethylene and propylene phases which are inherently incompatible. Without being bound to any theory, it is understood that the ethylene-propylene copolymer according to the present invention exhibits continuously linked crystalline bridges within an amorphous matrix. It is understood that this structure within the ethylene-propylene copolymer plays an essential part in the generation of the nanostructure as well as the formation of a homogeneous phase within the polymer composition when being blended with the isotactic propylene polymer.

For the purpose of this application, an ethylene-propylene copolymer comprising "propylene" is understood to be an ethylene-propylene copolymer which comprises "monomer units derivable from propylene". According definitions apply for "ethylene" monomer units.

In a preferred aspect of the present invention, the ethylene-propylene copolymer consists of ethylene and propylene, preferably from 70 to 90% by weight, most preferably from 80 to 89% by weight propylene, and from 10% to 30% by weight, most preferably from 11 to 20% by weight ethylene, based on the total weight of the ethylene- propylene copolymer.

The inventors unexpectedly found out that the ethylene-propylene ratio, the average block lengths (of ethylene and propylene) as well as the overall content of EPE and PEP units (single monomer inclusion) within the ethylene-propylene copolymer strongly influence both the compatibility with i-PP within the final polymer composition and the flexibility of the final polymer composition due to an effect on the overall crystallinity. With respect to the latter, it was found out that a minimum propylene content in the copolymer is required (to >60 % by weight) to ensure the compatibility with i-PP. However, the ethylene content and incorporation of ethylene in the copolymer is crucial for disrupting the lamella formation and polymer chain order which leads to a lower crystallinity and, therefore, to a high flexibility.

In particular, the inventors found out that if the ethylene content within the inventive ethylene-propylene copolymer is too high (i.e. higher than 40 % by weight), this may result in a liquid-liquid phase separation as mentioned above where the final structure will tend to look like a i-PP with an array of micro-scale droplets of the rubbery ethylene-rich phase. Another possibility is the occurrence of liquid-solid phase separation especially under slow cooling from the hot molten state where the differences in the crystallization speeds of the two "incompatible" polymer parts appear highest.

Accordingly, if the propylene content within the inventive ethylene-propylene copolymer is too high (i.e. higher than 95% by weight) - logically resulting in long propylene blocks - the ethylene-propylene copolymer tends to behave like conventional i-PP. Small ethylene units will tend to be incorporated into the i-PP phase such that also the final blend looks structurally very much like i-PP, with no distinct dispersed "rubbery" phase. Therefore, no benefit of increased flexibility will be achieved. Additionally, the existence of such larger propylene blocks leads to micro-scale phase separation as mentioned above for classic block-copolymers.

Therefore, to ensure sufficient compatibility with neither liquid-liquid nor liquid-solid phase separation, the ethylene-propylene copolymer preferably contains propylene in a content within the above-mentioned ranges, most preferably 87 % by weight, preferably with propylene blocks of 8.2 monomer units length on average. Accordingly, to ensure sufficient flexibility and amorphousness, the ethylene-propylene copolymer preferably contains ethylene in a content within the above-mentioned ranges, most preferably 13 % by weight, preferably with short ethylene blocks of 1.2 monomer units length on average.

According to an aspect, the ethylene-propylene copolymer has an overall proportion of ethylene-propylene-ethylene (EPE) and propylene-ethylene-propylene (PEP) units of 10 to 20% on average, preferably 11 to 18%, more preferably 14 to 16%, based on the total number of triades present in the ethylene-propylene copolymer. The term "triades" will be described in more detail below. In this respect, the inventors found out that a high content of single monomer inclusions such as EPE and PEP units within the above-mentioned ranges increases the possibility of chain order disruption in the crystalline lamellae and therefore decrease of overall crystallinity.

Further, the inventors found out that the structure and molecular architecture of the ethylene-propylene copolymer has strong influence on the prevention of the above and below described phase separation phenomena between the ethylene-propylene copolymer when being blended with the isotactic propylene polymer (i-PP). Therefore, the specific distribution of ethylene and propylene units within the ethylene-propylene copolymer contributes to the absence of phase separation when being blended with isotactic polypropylene (i-PP).

This can be seen by the copolymer architecture of the ethylene-propylene copolymer determined by ¹³C-NMR. Accordingly, samples of ethylene-propylene copolymers are dissolved in 1,2,4-trichloro benzene (TCB) und tetrachloro ethylene D6 (TCE-d6) and measured at 120°C. The copolymer architecture reveals the following aspects of the ethylene-propylene copolymer: the average ethylene (E) block length, the average propylene (P) block length, the proportion of propylene-propylene (PP) diades, the proportion of ethylene-propylene (EP) diades, the proportion of ethylene-ethylene (EE) diades, the proportion of propylene-propylene-propylene (PPP) triades, the proportion of propylene-propylene-ethylene (PPE) triades, the proportion of ethylene-propylene-ethylene (EPE) triades, the proportion of propylene-ethylene-propylene (PEP) triades, the proportion of ethylene-ethylene-ethylene (EEE) triades and the proportion of ethylene-ethylene-propylene (EEP) triades.

For the purpose of this application the above-mentioned average ethylene (E) block length refers to the number of monomers (ethylene units) which are present per continuous ethylene block on average within the ethylene-propylene copolymer. According definition applies for the average propylene (P) block length For instance, in case the average ethylene block length is 8.0 monomer units, this may result from e.g. ethylene blocks within the whole ethylene-propylene copolymer, of which one third consists of 7 ethylene monomers, another third consist of 8 ethylene monomers and another third consists of 9 ethylene monomers.

For the purpose of this application the above-mentioned proportions of diades/triades are based on the total number of diades/triades present in the ethylene-propylene copolymer. In general, a copolymer consisting of n monomers exhibits n-1 diades and n-2 triades. For instance, a copolymer consisting of 1001 monomers exhibits 1000 diades. In case 200 diades consist of propylene-propylene, 200 diades consist of ethylene-propylene and 100 diades consist of ethylene-ethylene, the proportion of propylene-propylene diades is 40%, the proportion of ethylene-propylene diades is 40% and the proportion of ethylene-ethylene diades is 20%. Similar considerations apply for triades.

According to the invention, the ethylene-propylene copolymer has an average polyethylene block length of 1.0 to 1.5 monomer units, more preferably 1.1 to 1.4 monomer units, most preferably 1.2 to 1.3 monomer units.

According to the invention, the ethylene-propylene copolymer has an average polypropylene block length of 5.0 to 10.0 monomer units, more preferably 5.5 to 9.0 monomer units, most preferably 6.0 to 8.5 monomer units.

According to an aspect the ethylene-propylene copolymer has a proportion of propylene-propylene diades of 60% to 79%, more preferably 63% to 78%, most preferably 65% to 77% based on the total number of diades present in the copolymer.

According to an aspect the ethylene-propylene copolymer has a proportion of ethylene-propylene diades of 16% to 30%, more preferably 18% to 29%, most preferably 20% to 28% based on the total number of diades present in the copolymer.

According to an aspect the ethylene-propylene copolymer has a proportion of ethylene-ethylene diades of 1% to 4.5%, more preferably 1.5% to 4.3%, most preferably 2% to 4% based on the total number of diades present in the copolymer.

According to an aspect the ethylene-propylene copolymer has a proportion of propylene-propylene-propylene triades of 50% to 70%, more preferably 55% to 68%, most preferably 60% to 66% based on the total number of triades present in the copolymer.

According to an aspect the ethylene-propylene copolymer has a proportion of propylene-propylene-ethylene triades of 12% to 25%, more preferably 13% to 22%, most preferably 14% to 20% based on the total number of triades present in the copolymer.

According to an aspect the ethylene-propylene copolymer has a proportion of ethylene-propylene-ethylene triades of 4% to 20%, more preferably 5% to 10%, most preferably 6% to 8% based on the total number of triades present in the copolymer.

According to an aspect the ethylene-propylene copolymer has a proportion of propylene-ethylene-propylene triades 6% to 20%, more preferably 7% to 15%, most preferably 8% to 10% based on the total number of triades present in the copolymer.

According to an aspect the ethylene-propylene copolymer has a proportion of ethylene-ethylene-propylene triades of 1% to 10%, more preferably 2% to 8%, most preferably 3% to 6% based on the total number of triades present in the copolymer.

According to an aspect the ethylene-propylene copolymer has a proportion of ethylene-ethylene-ethylene triades of 0.1% to 2%, more preferably 0.2% to 1%, most preferably 0.3% to 0.6% based on the total number of triades present in the copolymer.

According to an aspect the ethylene-propylene copolymer has a crystallinity of 10% to 40%, more preferably 15% to 30%, most preferably 20% to 28%. The crystallinity degree of the ethylene-propylene copolymer is determined as ratio of the measured melting enthalpy (via DSC) and the theoretical melting enthalpy of a perfect i-PP crystal (=207.1 J/g).

According to an aspect the ethylene-propylene copolymer has a weight average molecular weight M, of 150,000 g/mol to 500,000 g/mol , more preferably 180.000 g/mol to 400.000 g/mol, most preferably 200.000 to 300.000 g/mol. Accordingly, the ethylene-propylene copolymer has a number average molecular weight Mₙ of 20,000 g/mol to 130,000 g/mol, more preferably 30.000 g/mol to 120.000 g/mol, most preferably 50.000 g/mol to 80.000 g/mol. Furthermore, the z-average molecular weight M_{z} of the ethylene-propylene copolymer is 300,000 g/mol to 700,000 g/mol, more preferably 400.000 to 650.000 g/mol, most preferably 500.000 to 600.000 g/mol. Preferably, the poly dispersity PD (defined as M_{w}/Mₙ) ranges from 1.2 to 25, more preferably from 1.5 to 13, most preferably from 2.5 to 6, particularly from 3.0 to 4.0. The above-mentioned molecular weights are measured via high temperature gel permeation chromatography (HT-GPC) at 150°C using 1,2,4-trichloro benzene (TCB) as eluent and polystyrene as calibration standards.

According to an aspect the ethylene-propylene copolymer shows no phase separation occurrence determined via visual inspection, polarized microscopy, atomic force microscopy (AFM) and scanning electron microscopy (SEM) or a combination of one or more of these techniques. The definition and the determination of phase separation are described in more detail below with regard to the inventive polymer composition.

According to an aspect the ethylene-propylene copolymer has a Young's modulus (i.e. elastic modulus) of 200 MPa to 800 MPa, more preferably 300 MPa to 700 MPa, most preferably 400 MPa to 600 MPa. The Young's modulus (elastic modulus) is determined according to ISO 527-2 at room temperature (25°C). In particular, the Young's modulus is determined from the slope of a stress-strain curve created during tensile tests ISO 527-2 conducted on a sample of the ethylene- propylene copolymer. According to a preferred aspect, the above Young's modulus is obtained at all temperatures between 10°C to 80°C.

According to an aspect the ethylene-propylene copolymer has a softening temperature of higher than 120°C, preferably higher than 130°C, more preferably higher than 140°C. According to a further aspect, the ethylene-propylene copolymer has a softening temperature of 120°C to 200°C, preferably 130°C to 180°C, more preferably 140°C to 150°C. The softening temperature is defined as the temperature at which a material softens beyond some arbitrary softness. It can be determined, for instance, by the Vicat method based on ASTM-D1525 (or, in an alternative or additional aspect, based on ISO 306). In particular, the softening temperature is determined via thermal mechanical analysis (TMA) using a quartz probe with a flat tip (1 mm diameter) pressed on a sample (preferably 5x5 mm) with a constant load of 100-5000 mN (preferably 100mN) and a temperature rate of 0.5 to 10 K/min (preferably 1 K/min) under air environment. During continuous heating of the sample, the quartz probe caves in (penetrates) the sample until the quartz probe reaches the bottom of the sample.

According to an aspect the ethylene-propylene copolymer has a steady state conductivity (DC) of less than 1^{∗}10⁻¹² S/m, preferably of less than 2^{∗}10 ⁻¹³ S/m, and more preferably of less than 2.5*10 ⁻¹⁴ S/m. In a preferred aspect, the ethylene-propylene copolymer has a steady state conductivity (DC) of 1^{∗}10 ⁻¹⁵ S/m to 1.5 ^{∗}10 ⁻¹⁴ S/m, preferably 1.5*10 ⁻¹⁵ S/m to 1.0*10 ⁻¹⁴ S/m S/m more preferably 2^{∗}10 ⁻¹⁵ S/m to 5 ^{∗}10 ⁻¹⁵ S/m. The steady state conductivity (DC) is determined by applying a three electrode system (40 mm round electrode diameter with guard electrode) and measuring the leakage current with a sensitive picoamperemeter (Keithley 6485) on 1 mm thick plates at 70°C and 20 kV/mm DC after at least 80 hours.

According to an aspect the ethylene-propylene copolymer has an electrical breakdown strength (DC) of higher than 300 kV/mm, preferably higher than 350 kV/mm more preferably higher than 400 kV/mm at any cooling rate. In this respect, electrical breakdown refers to a rapid reduction in the resistance of an electrical insulator that can lead to a spark jumping around or through the insulator. The electrical breakdown strength (DC) is determined according to ASTM D149-87 at room temperature on 0.1 mm thick plates (18x18 cm) manufactured in a hot press and measured in silicone oil using a 100 kV digital HVDC source with a voltage ramping rate of 100 V/s.

According to another aspect of the invention, the ethylene-propylene copolymer is non-cross-linked. This leads to several favorable effects. In particular, the use of a copolymer which is non-cross-linked results in shorter production times (due to less process steps) and the possibility to recycle the cable having reached the end of its operational lifetime. Further, no scorch phenomena occur and the risk of inhomogeneity (between the individual components of the final insulation layer) is lowered since no exothermic cross-linking reactions have been carried out. Moreover, due to absence of volatile by-products (usually generated during cross-linking), high voltage ratings, low conductivity values are achieved, and, no degassing is required. Further, due to the fact that less additives are required, a smaller number of compounds has to be adjusted to each other and the complexity of the insulation system is reduced. Hence, a higher compatibility with other materials such as semicon layers is to be expected.

Optionally, the ethylene-propylene copolymer comprises less than 10%, more preferably from 0.1 to 8%, most preferably from 1 to 5% by weight of a further polymer. Said further polymer can be represented by any other polymer, copolymer, terpolymer or polymer mixture. Preferably, further polymers are so-called ethylene propylene diene terpolymer rubbers (EPDM). Therein, the diene comonomer has preferably from 4 to 20 carbon atoms. Said diene copolymer is preferably selected from: linear or branched, conjugated or non-conjugated diolefins. Preferably, diene copolymers are 1,3-butadiene, 1,4-hexadiene or 1,6-octadiene, monocyclic or polycyclic dienes, such as 1,4-cyclohexadiene, 5-ethylidene-2-norbornene, 5-methylene-2-norbornene.

According to a specific aspect of the invention, the ethylene-propylene copolymer is SC820CF^{®} (i.e. Bormed SC820CF^{®} from Borealis) or a copolymer with similar properties, in particular a similar ethylene/propylene weight ratio (i.e. any of the ratios mentioned herein). According to a particular aspect, the ethylene-propylene copolymer leads to a similar architecture within the polymer composition as it is the case for SC820CF^{®} (e.g. similar average ethylene (E) block length, or similar average propylene (P) block length within the polymer composition).

Specifically, according to an aspect, the average ethylene and/or propylene block length (defined in monomer units) of the ethylene-propylene copolymer differs in average by less than 50% or even less than 20% from the average ethylene and/or propylene block length (defined in monomer units) of SC820CF^{®}, but that is analogous in every other respect.

### Isotactic propylene polymer (i-PP)

According to an aspect, the isotactic propylene polymer (i-PP) preferably has a melt flow index (MFI, measured at 230°C) of 1 to 20 g/10min, more preferably 2 to 8 g/10min, most preferably 3 to 10 g/lOmin. The MFI is determined by ISO 1133.

According to an aspect, the isotactic propylene polymer (i-PP) has a melting temperature of 140 to 200°C, more preferably 145 to 180°C, most preferably 150 to 170°C. The melting temperature is determined by ISO 11357-1/-3.

According to an aspect the isotactic propylene polymer (i-PP) has a density of 700 to 1200 kg/m³, more preferably 800 to 1000 kg/m³, most preferably 900 to 980 kg/m³.The density is determined by ISO 1183.

According to an aspect the isotactic propylene polymer (i-PP) has a crystallinity of 40% to 80%, more preferably 50% to 70%, most preferably 55% to 65%. The crystallinity degree of the isotactic propylene polymer is determined as ratio of the measured melting enthalpy (via DSC) the theoretical melting enthalpy of a perfect i-PP crystal (=207.1 J/g).

According to an aspect the propylene polymer (i-PP) shows no phase separation occurrence determined via visual inspection, polarized microscopy, atomic force microscopy (AFM) and scanning electron microscopy (SEM) or a combination of one or more of these techniques. The definition and the determination of phase separation are described in more detail below with regard to the polymer composition.

According to an aspect the isotactic propylene polymer (i-PP) has a Young's modulus (i.e. elastic modulus) of 1000 MPa to 2000 MPa, more preferably 1200 MPa to 1800 MPa, most preferably 1400 MPa to 1600 MPa. The Young's modulus (elastic modulus) is determined according to ISO 527-2 at room temperature (25°C). In particular, the Young's modulus is determined from the slope of a stress-strain curve created during tensile tests ISO 527-2 conducted on a sample of the isotactic propylene polymer (i-PP). According to a preferred aspect, the above Young's modulus is obtained at any temperature between 10°C to 80°C.

According to an aspect the isotactic propylene polymer (i-PP) has a softening temperature of higher than 140°C, preferably higher than 150°C, more preferably higher than 160°C. According to a further aspect the isotactic propylene polymer (i-PP) has a softening temperature of 140°C to 200°C, preferably 150°C to 180°C, more preferably 160°C to 170°C. The softening temperature is defined as the temperature at which a material softens beyond some arbitrary softness. It can be determined, for instance, by the Vicat method based on ASTM-D1525 (or, in an alternative or additional aspect, based on ISO 306). In particular, the softening temperature is determined via thermal mechanical analysis (TMA) using a quartz probe with a flat tip (1 mm diameter) pressed on a sample (preferably 5x5 mm) with a constant load of 100-5000 mN (preferably 100mN) and a temperature rate of 0.5 to 10 K/min (preferably 1 K/min) under air environment. During continuous heating of the sample, the quartz probe caves in (penetrates) the sample until the quartz probe reaches the bottom of the sample.

According to an aspect the isotactic propylene polymer (i-PP) has a steady state conductivity (DC) of less than 1^{∗}10⁻¹² S/m, preferably of less than 2^{∗}10 ⁻¹³ S/m, and more preferably of less than 2.5^{∗}10 ⁻¹⁴ S/m. In a preferred aspect, the isotactic propylene polymer (i-PP) has a steady state conductivity (DC) of 5*10 ⁻¹⁶ S/m to 1.5*10 ⁻¹⁴ S/m, preferably 1.0 ^{∗}10⁻¹⁵ S/m to 8.0*10 ⁻¹⁵ S/m more preferably 1^{∗}10 ⁻¹⁵ S/m to 3*10 ⁻¹⁵ S/m. The steady state conductivity (DC) is determined by applying a three electrode system (40 mm round electrode diameter with guard electrode) and measuring the leakage current with a sensitive picoamperemeter (Keithley 6485) on 1 mm thick plates at 70°C and 20 kV/mm DC after at least 80 hours.

According to an aspect the isotactic propylene polymer (i-PP) has an electrical breakdown strength (DC) of higher than 300 kV/mm, preferably higher than 350 kV/mm more preferably higher than 380 kV/mm at any cooling rate. In this respect, electrical breakdown refers to a rapid reduction in the resistance of an electrical insulator that can lead to a spark jumping around or through the insulator. The electrical breakdown strength (DC) is determined according to ASTM D149-87 at room temperature on 0.1 mm thick plates (18x18 cm) manufactured in a hot press and measured in silicone oil using a 100 kV digital HVDC source with a voltage ramping rate of 100 V/s.

### Weight ratio of ethylene-propylene copolymer/isotactic propylene polymer (i-PP)

According to an aspect, the weight ratio of the ethylene-propylene copolymer and the isotactic propylene polymer (i-PP) within the polymer composition preferably ranges from 10:90 to 90:10, preferably 20:80 to 50:50, most preferably from 25:75 to 35:65, particularly 30:70.

### Polymer Composition

According to an aspect the polymer composition shows no phase separation occurrence determined via visual inspection, polarized microscopy, atomic force microscopy (AFM) and scanning electron microscopy (SEM) or a combination of one or more of these techniques.

For the purpose of this application, phase separation occurrence determined via the above-mentioned techniques is understood to be the separation of two or more distinct phases which are present in a mixture observed at the micro-scale. In this respect, a phase is a region of space within a mixture which can be considered as essentially uniform with regard to its physical properties. More specifically, no separation in different domains, e.g. i-PP domain and copolymer domain is observed within a phase. An observation at micro-scale is understood to be obtained from an analytical technique (such as visual inspection, polarized microscopy, atomic force microscopy (AFM) and scanning electron microscopy (SEM)) which analyzes the structure of a material (such as the polymer composition) in a scale above 500 nm, e.g. from 500 nm to 50 µm.

Consequently, the polymer composition exhibits only one single phase throughout the whole polymer composition at the micro-scale. Without being bound to any theory, this single phase within the polymer composition is obtained in that the ethylene-propylene copolymer domains behave as macromolecular surfactants and migrate to the interphase separating adjacent isotactic propylene polymer (i-PP) domains. Hence, inhomogeneities at smaller scales are not taken into account. The polymer composition according to the present invention has a heterogeneous nanostructure (i.e. below 500 nm) and exhibit domains having dominating propylene character (blocks) and domains having dominating ethylene character (blocks) leading to a mosaic pattern (checkerboard pattern) at the nano-scale. Preferably, any such domains extend (on average and/or in any direction) to less than 300 nm, more preferably less than 200 nm, most preferably less than 100 nm as determined by atomic force microscopy (AFM) in tapping mode (phase detection). In other words, the polymer composition according to the present invention preferably exhibits phase separated domains on a scale of less than 300 nm, more preferably less than 200 nm, most preferably less than 100 nm as determined by atomic force microcopy (AFM) in tapping mode (phase detection) or scanning electron microscopy (SEM).

In view of commonly used insulating materials, one might conclude that thermoplastic blend mixtures with at least one high melting but stiff component - such as HDPE or i-PP - and one flexible component - e.g. LDPE (E = 200-300 MPa) or ethylene copolymer - can be used in order to obtain a suitable insulation material for HV cables. However, as reported in literature by R. A. Shanks, J. Li, L. Yu, Polymer 2000, 41, 2133-2139 polyethylene and isotactic polypropylene are not miscible in the melt stage and their blends suffer from liquid-liquid phase separation. Moreover, the use of block-copolymers consisting of a few but large propylene and ethylene blocks along with i-PP were also believed to lead to liquid-liquid phase separation similar to blends of i-PP and PE homopolymers. These highly complex issues were taken into consideration by the present inventors.

In particular, commonly used thermoplastic polymer mixtures (thermoplastic blend) comprising two or more distinct polymers typically suffer from incompatibility of the polymers. As a consequence, micro-scale phase separation phenomena occur which may have adverse effects on the properties of the thermoplastic polymer blend. This is owed to the fact that the separated phases present within the polymer blend essentially consist of a polymer material different from that of the whole polymer blend (e.g. a polymer material of only one polymer or of a polymer blend having a distinct blend ratio).

In general, phase separation in a thermoplastic blend upon cooling from molten state can be of liquid-liquid or liquid-solid nature. Blends of two polymers A and B are generally considered as being miscible or immiscible on the basis of their behaviour in the melt. Liquid-liquid phase separation occurs in case the two polymers A and B are immiscible in the melt at elevated temperature, liquid droplets of one component A are formed within a continuous phase of polymer B resulting into separated nano- to micro-scale islands of A in the polymer B matrix. Liquid-solid phase separation may occur in case the polymers A and B both are likely to be mixed - to some degree - in the hot melt forming a liquid homogenous phase. However, even miscible combinations can phase separate during crystallization, when one component is more readily crystallisable than the other. This part becomes solid first, leaving the less crystallisable in the melt. In other words: if the crystallization speed of polymers A and B are too much apart from each other - due to distinctions in their polymer nature - liquid-solid phase separation is likely to occur leading to the above-mentioned adverse effects. Moreover, liquid-solid phase separation is also dependent on the cooling rate of the melt of the blend. Generally, a lower cooling rate results in a higher risk of liquid-solid phase separation occurrence compared to a higher cooling rate.

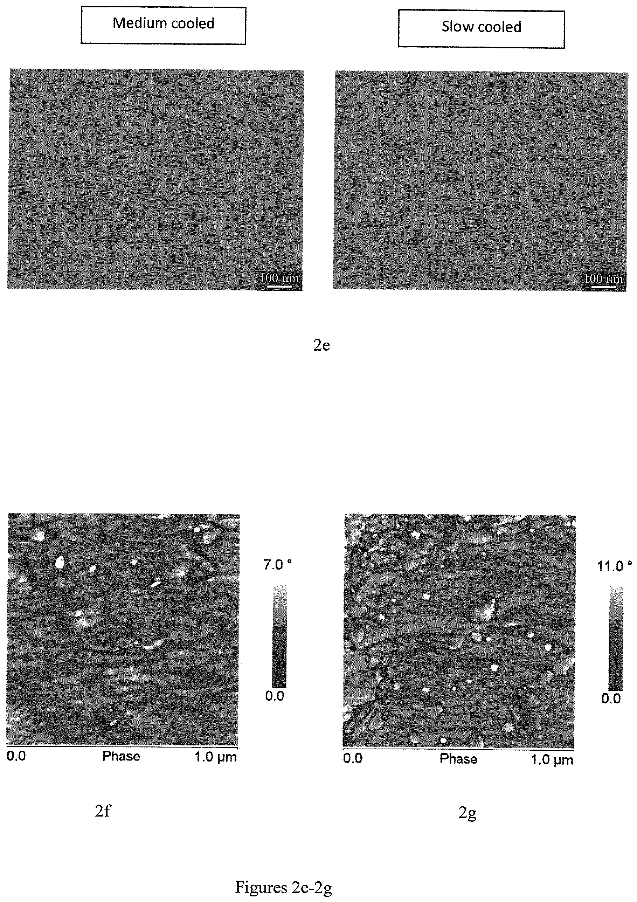

In contrast to commonly used thermoplastic blends, the inventive polymer composition exhibits a very high compatibility of the two applied base polymers (i.e. i-PP and ethylene-propylene copolymer) resulting in a highly homogenous material. Therefore, any phase separation as observed widely for other thermoplastic blends does not occur in the inventive polymer composition after cooling from molten state due to carefully adjusting the propylene and ethylene content within the ethylene-propylene copolymer in the above-described ranges. This is clearly demonstrated by Figures 2a-2g which show measurements/graphs concerning phase separation occurrence of i-PP (2a), Versify 2200^{®} (2b), Versify 3000 ^{®} (2c), SC820CF^{®} (2d), i-PP/SC820CF^{®} in a ratio of 50:50 (2e), i-PP/Versify 2200^{®} in a ratio of 70:30 2(f) and i-PP/Versify 3000^{®} in a ratio of 70:30 (2g), measured via AFM/SEM/optimized microscopy. In particular, in Figure 2e, the polymer composition according to the present invention (i.e. i-PP/SC820CF^{®} in a ratio of 50:50) exhibits a highly homogeneous phase (as shown by polarized microscopy) while commonly used thermoplastic blends shown in Figures 2f and 2g (i.e. i-PP/Versify 2200^{®} in a ratio of 70:30 and i-PP/Versify 3000^{®} in a ratio of 70:30, respectively) exhibit phase separation in micro scale (as shown by AFM measurements). For instance, in Figure 2g, separated phases are detectable as distinct spheres separated from the remaining surface of the blend.

The degree of homogeneity throughout the polymer composition can be further improved by carefully adjusting the polymer architecture of the ethylene-propylene copolymer, particularly the overall proportion of ethylene-propylene-ethylene (EPE) and propylene-ethylene-propylene (PEP) units as well as the average ethylene block length within the above-described ranges. In this regard, it has been found that the specific polymer architecture of the ethylene-propylene copolymer allows perfect co-crystallization with the isotactic polypropylene.

According to a preferred aspect the polymer composition shows no phase separation occurrence determined via one or more of the above-mentioned techniques at any cooling rate, i.e. at medium-fast cooling and/or slow cooling. In this respect, medium-fast cooling means a cooling rate of higher than 1°C/min, starting from the temperature at which the blend is melted until room temperature. Accordingly, slow cooling means a cooling rate of lower than 1°C/min, starting from the temperature at which the blend is melted until room temperature. In a preferred aspect cooling (fast-medium cooling and/or slow cooling) may be performed under nitrogen atmosphere. According to a preferred aspect the crystallization speeds of the ethylene-propylene copolymer and the isotactic propylene polymer differ in at most 20%, preferably at most 10% from each other. According to a further preferred aspect the ethylene-propylene copolymer and the isotactic propylene polymer are miscible in the melt after being mixed and melted at an elevated temperature, preferably at about 190 to 230°C.

Therefore, according to a preferred aspect the polymer composition, produced by mixing
- an ethylene-propylene copolymer comprising from 70 to 90% by weight propylene and from 10 to 30% by weight ethylene, based on the total weight of the ethylene-propylene copolymer,
- an isotactic propylene homopolymer, and
- optionally further additives, in a weight ratio of the ethylene-propylene copolymer to the isotactic propylene polymer ranging from 90:10 to 10:90,

at an elevated temperature, preferably at about 190 to 230°C, and
ii) cooling the mixture obtained from step i) at a cooling rate of lower than 10°C/min, preferably lower than 1°C/min,
shows no phase separation occurrence determined via AFM/SEM/optimized microscopy.

According to an aspect the polymer composition has a Young's modulus (i.e. elastic modulus) of less than 1200 MPa, preferably less than 1100 MPa, more preferably less than 1000 MPa. In a preferred aspect the polymer composition has a Young's modulus (i.e. elastic modulus) of 500 MPa to 1200 MPa, more preferably 600 MPa to 1000MPa, most preferably 850 MPa to 950 MPa. The Young's modulus (elastic modulus) is determined according to ISO 527-2 at room temperature (25°C). In particular, the Young's modulus is determined from the slope of a stress-strain curve created during tensile tests ISO 527-2 conducted on a sample of the polymer composition. According to a preferred aspect, the above Young's modulus is obtained at all temperatures between 10°C to 80°C.

According to an aspect the polymer composition has a softening temperature of higher than 140°C, preferably higher than 150°C, more preferably higher than 160°C. According to a further aspect the polymer composition has a softening temperature of 140°C to 200°C, preferably 150°C to 180°C, more preferably 160°C to 170°C. The softening temperature is defined as the temperature at which a material softens beyond some arbitrary softness. It can be determined, for instance, by the Vicat method based on ASTM-D1525 (or, in an alternative or additional aspect, based on ISO 306). In particular, the softening temperature is determined via thermal mechanical analysis (TMA) using a quartz probe with a flat tip (1 mm diameter) pressed on a sample (preferably 5x5 mm) with a constant load of 100-5000 mN (preferably 100mN) and a temperature rate of 0.5 to 10 K/min (preferably 1 K/min) under air environment. During continuous heating of the sample, the quartz probe caves in (penetrates) the sample until the quartz probe reaches the bottom of the sample.

According to an aspect the polymer composition has a steady state conductivity (DC) of less than 1^{∗}10⁻¹² S/m, preferably of less than 2^{∗}10 ⁻¹³ S/m, and more preferably of less than 2.5*10 ⁻¹⁴ S/m. In a preferred aspect, the polymer composition has a steady state conductivity (DC) of 1^{∗}10 ⁻¹⁵ S/m to 1.5*10 ⁻¹⁴ S/m, preferably 1.5*10 ⁻¹⁵ S/m to 1.0*10 ⁻¹⁴ S/m more preferably 2^{∗}10 ⁻¹⁵ S/m to 5^{∗}10 ⁻¹⁵ S/m. The steady state conductivity (DC) is determined by applying a three electrode system (40 mm round electrode diameter with guard electrode) and measuring the leakage current with a sensitive picoamperemeter (Keithley 6485) on 1 mm thick plates at 70°C and 20 kV/mm DC after at least 80 hours.

According to an aspect the polymer composition has an electrical breakdown strength (DC) at room temperature of higher than 300 kV/mm, preferably higher than 350 kV/mm, more preferably higher than 400 kV/mm at any cooling rate. In this respect, electrical breakdown refers to a rapid reduction in the resistance of an electrical insulator that can lead to a spark jumping around or through the insulator. The electrical breakdown strength (DC) is determined according to ASTM D149-87 at room temperature on 0.1 mm thick plates (18x18 cm) manufactured in a hot press and measured in silicone oil using a 100 kV digital HVDC source with a voltage ramping rate of 100 V/s. Thereby, the electrical breakdown strength (DC) is determined after having cooled down the polymer composition at three different cooling rates (i.e. fast, medium or slow cooling). In this regard, fast cooling means a cooling with a rate of larger than 10 °C/min. Accordingly, medium cooling means cooling at a rate in a range of 10 to 1 °C/min. Slow cooling means a cooling with a rate of less than 1 °C/min.

According to an aspect the polymer composition has a good space charge behavior. This means that only homo charges are generated in the sample close to the electrodes, that the stored charge density is below 30 C/m³ after charge injection and that a fast charge decay with 50 % of remaining space charge after less than 40 minutes occurs. Space charge behavior is determined on 0.15 mm thickness samples using PEANUTS pulsed electro-acoustic system (5-Lab) applying both a constant DC voltage to the sample as well as a 400 Hz/600 V signal for the measurement of space charge employing a PVDF sensor. Figures 3a-3f show experimental details about space charge measurements of polymers/ copolymers.

The polymer composition according to the present invention preferably exhibits a linear elasticity limit of higher than 4%, more preferably higher than 5%, most preferably higher than 6%, particularly 6% to 8% at room temperature, determined according to ISO 527-2.

The polymer composition according to the present invention preferably exhibits a tensile strength of 5 MPa to 35 MPa, more preferably of 10 MPa to 30 MPa, most preferably of 15 MPa to 25 MPa at room temperature, determined according to ISO 527-2.

The polymer composition according to the present invention preferably exhibits a dielectric constant at room temperature of less than 2.8, more preferably less than 2.5, most preferably less than 2.3 measured by ASTM D150, IEC 60250.

Another preferred aspect of the invention relates to a cable for low, medium and/or high voltage (HV) as well as for both direct current (DC) or alternating current (AC) transmission or distribution. Said inventive cables preferably comprise a conductor surrounded by an insulation layer of the polymer composition according to the present invention, and are optionally surrounded by a conductive and/or a semi-conductive layer located between the conductor and the inner surface of the insulation layer, and are further optionally surrounded by a jacketing layer covering the outer surface of the insulating layer characterized in that the cable exhibits a value of dielectric loss of less than 10⁻², preferably less than 10⁻³, and more preferably of less than 10⁻⁴, determined by ASTM D150 und ASTM D2520.

These cables comprising the insulation layer of the polymer composition according to the present invention have a very low shrinkage, preferably lower than 1.50%, more preferably lower than 1.30%, still more preferably lower than 1.20%, still more preferably lower than 1,10% and most preferably lower than 1.05%.

According to the present invention, shrinkage is measured as distance difference between two marks drawn onto the outer semicon layer before and after annealing of the complete cable core. Shrinkage was determined according to AEIC CS5-94.

Moreover, the sagging determined according to IEC 60840 (1999) should be preferably lower than 20%, more preferably lower than 12%, still more preferably lower than 8%, and most preferably lower than 6%. In addition, it is preferred that both properties of the cables, i.e. shrinkage and sagging, fall simultaneously within the given ranges as defined above.

An example of a cable according to the present invention comprising (from the center moving outwards) is shown in Figure 1 having the following structure:
- a stranded multi-wire conductor 10;
- a first extruded conductive or semi-conductive shield 11 disposed around and outside the conductor 10 and inside a conductor insulation 12;
- an extruded conductor insulation 12 with an extruded polymer composition according to the present invention;
- a second extruded semi-conductive shield 13 disposed outside the conductor insulation 12;
- a metallic screen 14 ;
- an outer jacketing layer 15 arranged outside the metallic screen 14.

Another example of a cable according to the present invention comprises (from the center moving outwards) a stranded multi-wire conductor, a first extruded conductive or semi-conductive shield 11 disposed around and outside the conductor 10 and inside a conductor insulation 12, an extruded conductor insulation 12 with an extruded polymer composition according to the present invention, a second extruded semi-conductive shield 13 disposed outside the conductor insulation 12, a metallic screen 14; an outer jacketing layer 15 arranged outside the metallic screen 14.

According to another embodiment of the invention, the invention relates to the use of the polymer composition as an insulating material for an electrical component. In particular, the invention relates to the use of the polymer composition for insulating electrical coils and in the production of electrical components such as transformers, bushings, insulators, switches, sensors, converters, cable end seals and high voltage surge arresters.

According to another aspect, the invention relates to the use of the polymer composition according to the present invention for high-voltage insulations for indoor and outdoor use, especially for outdoor insulators associated with high-voltage lines, as long-rod, composite and cap-type insulators, and also for base insulators in the medium-voltage sector, in the production of insulators associated with outdoor power switches, measuring transducers, lead-throughs, and overvoltage protectors, in switchgear construction, in power switches, dry-type transformers, and electrical machines, as coating materials for transistors and other semiconductor elements and/or to impregnate electrical components.

Another aspect of the present invention relates to an insulating material for electrical articles comprising the polymer composition according to the present invention.

Another aspect of the present invention relates to electrical articles comprising the polymer composition according to the present invention.

In accordance with the present invention, the use of the polymer composition as defined above makes it possible to obtain a recyclable, flexible coating which has excellent mechanical properties, both in terms of the elastic modulus and a high softening temperature.

The polymer composition according to the present invention shows a low elastic modulus of less than 1000 MPa and full linear elasticity higher than 5% elongation with no expected plastic deformation and material yielding. Even with such high flexibility, the blends of the specific ethylene-propylene copolymer with isotactic polypropylene (i-PP) (i.e. the polymer composition) exhibit a high softening temperature, *inter alia* of higher than 140°C, which is near to the softening temperature of pure isotactic polypropylene and which results, therefore, in high thermal form-stability.

The mechanical properties mentioned above are accompanied by excellent electrical properties, such as - *inter alia* - insulation. Thus, the polymer compositions according to the present invention exhibit a high DC (direct current) breakdown strength of higher than 400 kV/mm at any cooling rate and a very low conductivity of less than 20 fS/m.

According to a further aspect, the present invention also comprises a method for producing a polymer composition, comprising the steps of
i) mixing
   - an ethylene-propylene copolymer comprising from 70 to 90% by weight propylene and from 10 to 30% by weight ethylene,
   - an isotactic propylene homopolymer, and
   - optionally further additives, in a weight ratio of the ethylene-propylene copolymer to the isotactic propylene polymer ranging from 90:10 to 10:90,
   at an elevated temperature, preferably at about 190 to 230°C, and
ii) cooling the mixture obtained from step i) at a cooling rate of lower than 10°C/min preferably lower than 1°C/min.

Optionally, cooling step ii) may also be carried out at a cooling rate of higher than 10°C/min. In a preferred aspect cooling of lower/higher than 1°C/min may be performed under nitrogen atmosphere.

In particular, the blends of all parts of the polymer composition as described herein can be prepared in a mixer such as twin-screw extruder or kneader - for example in a so-called brabender mixer - at an elevated temperature - for example at a temperature of at least 170°C, preferably at about 190 to 230°C. Preferably, mixing is carried out for 1 minute up to 5 hours, more preferably 5 minutes up to 3 hours, most preferably 10 minutes up to 1 hour. This results in a highly homogeneous mixture between all parts of the polymer composition as described and contributes to the prevention of phase separation after cooling the mixture as described above.

According to an aspect, woven or non-woven filaments can be compounded with the polymer composition according to the invention.

The polymer compositions can be prepared by blending the isotactic polypropylene homopolymer (i-PP) and the ethylene-propylene copolymer, preferably comprising from 70 to 90% by weight propylene and from 10 to 30% by weight ethylene and optionally a further polymer according to methods from the state of the art. Isotactic polypropylenes, polypropylene as well as -ethylene-propylene copolymers are commercially available. A great number of various ethylene-propylene copolymers are defined under product names. Kraton^{®}, SC820CF^{®}, Dynaflex^{®} etc. can be used in the compositions according to all embodiments. A typical ethylene-propylene copolymer which can be used according to the present invention comprises about 87 wt.-% propylene with propylene blocks of 8.2 monomer units on average, and about 13 wt.-% ethylene with short ethylene blocks of 1.2 monomer units on average.

In a preferred aspect of the present invention, the polymer compositions may comprise a micro- and nano-reinforcing material, preferably nano-oxides, nano silicates, nano-clays, and combination of thereof. Examples of such compounds are aluminum oxide, magnesium oxide, aluminosilicates, silicon oxide, zink oxide, etc.. Suitable diameters and length of such reinforcement should be in the nanometer scale from 1 nm - 5000 nm. This micro- or nano-reinforcing material may be present in the inventive polymer composition in an amount of up to 5% by weight, preferably, up to 3% by weight, more preferably up to 1% by weight, based on the total weight of the polymer composition.

According to a preferred aspect of the invention, the polymer composition may additionally comprise a fiber reinforcing material, preferably continuous mineral or organic fibers, more preferably glass fibers and ceramic fibers, most preferably mineral fibers from aluminum oxide fibers, basalt fibers and glass fibers or aramide fibers and polyester fibers. These fibers may be present in the inventive polymer composition in an amount of up to 5% by weight, preferably, up to 3% by weight, more preferably up to 1% by weight, based on the total weight of the polymer composition.

Depending on the type of the electrical insulator to be produced, the polymer composition may further contain optional additives selected from filler materials, wetting/dispersing agents, plasticizers, antioxidants, light absorbers, processing co-adjuvants, lubricants and pigments, as well as further additives used in electrical applications. These additives generally may be present in the inventive polymer composition in an amount of less than 25% by weight, preferably, less than 5% by weight, more preferably less than 1% by weight, based on the total weight of the polymer composition. Such additives are, for instance, antioxidants such as polymerized trimethyldihydroquinoline, 4,4'-thiobis(3-methyl-6-tert-butyl)phenol; pentaerythryl tetra[3-(3,5-ditertbutyl-4-hydroxyphenyl)propionate], 2,2'-thiodiethylene-bis-[3-(3,5-ditertbutyl-4-hy-droxyphenyl)propionate] and the like, or mixtures thereof. Such antioxidants are commercially available, for example, under the product name Iganox^{®}, Santonox^{®} as well as the other additives - such as filler materials.

Examples of filler materials are inorganic fillers such as silica and aluminum trihydrate (Al₂O₃·3H₂O), glass powder, chopped glass fibers, metal oxides such as silicon oxide (e.g. Aerosil, quartz, fine quartz powder) metal hydroxides, metal nitrides, metal carbides, natural and synthetic silicates or mixtures thereof. Aluminum trihydrate or silicon oxide (e.g. Aerosil, quartz, fine quartz powder) are particularly preferred as inorganic filler material. Also, the average particle size distribution of such fillers and their quantity present within the polymer composition corresponds to that average particle size distribution and quantity usually applied in electrical high voltage insulators.

Examples of suitable metals for metal oxides, metal hydroxide, metal nitrides or metal carbides are aluminum, bismuth, cobalt, iron, magnesium, titanium, zinc, or mixtures thereof.

One or more inorganic oxides or salts such as CoO, TiO₂, Sb₂O₃, ZnO, Fe₂O₃, CaCOs or mixtures thereof, may advantageously be added to the inventive polymer composition in minor amounts, generally in amounts of less than 25% by weight.

Preferably, the above-mentioned metal hydroxides - in particular magnesium and aluminum hydroxides - are used in the form of particles having sizes which can range from 0.1 to 100 µm, preferably from 0.5 to 10 µm. In the case of hydroxides, these can advantageously be used in the form of coated particles. Saturated or unsaturated fatty acids containing from 8 to 24 carbon atoms, and metal salts thereof are usually used as coating materials, such as, for example: oleic acid, palmitic acid, stearic acid, isostearic acid, lauric acid, magnesium or zinc stearate or oleate, and the like.

The amount of inorganic filler which is for example suitable for imparting flame-retardant properties may vary within a wide range, generally between 10 and 80% by weight, preferably between 30 and 70% by weight, relative to the total weight of the composition.

According to a preferred aspect of the present invention, the polymer composition is (semi-) conductive. This means that the polymer composition can also be used for non-insulating purposes. The conductive or semi-conductive composition is, according to a particular aspect, used as a cable jacket layer adjacent to an inner or outer layer of the cable insulation. Thereby, the layer may improve the interface between the insulation layer and the conductor or the outside. In case the polymer composition according to the present invention is semi-conductive, the polymer composition has an electrical conductivity between that of a conductor and an insulator and has a conductivity (at 25°C) in a range of 10⁻⁸ to 10⁶ S/m, preferably 10⁻⁷ to 10⁵ S/m, more preferably 10⁻⁶ to 10⁵ S/m, most preferably 10⁻⁴ to 10⁴ S/m. In case the polymer composition according to the present invention is conductive, the polymer composition has a conductivity of (at 25 °C) higher than 10⁵ S/m, preferably higher than 10⁶ S/m. According to another preferred aspect of the present invention, the polymer composition contains a conductive filler such as carbon black and/or is conductive or semi-conductive preferably having an electrical conductivity in the above-defined ranges. According to a preferred aspect of the present invention, the conductive filler such as carbon black may be present in the inventive polymer composition in an amount of up to 10% by weight, preferably, up to 5% by weight, more preferably up to 1% by weight, based on the total weight of the polymer composition. According to an aspect of the invention, a (semi-)conductive polymer composition may comprise a material according to the invention and conductive fillers such as carbon black exhibiting a conductivity of (at 25°C) higher than 10⁵ S/m, preferably higher than 10⁶ S/m. According to another aspect of the invention a cable according to the invention may have a semi-conductive layer comprising a semi-conductive polymer composition comprising a material according to the invention and conductive fillers such as carbon black exhibits a conductivity of (at 25°C) higher than 10⁵ S/m, preferably higher than 10⁶ S/m.

Moreover, the invention is directed to a cable for low, medium and/or high voltage (HV) as well as for both direct current (DC) or alternating current (AC) transmission or distribution comprising a conductor surrounded by an insulation layer of the polymer composition.

Moreover, the conductor can be surrounded by one or more inner conductive and/or semiconductive layer(s) comprising a specific conductive and/or semiconductive composition, an insulation layer comprising the polymer composition according to the invention and optionally a jacketing layer. According to another embodiment, the invention is directed to a cable, said cable comprising a conductor surrounded by at least an inner semiconductive layer comprising a first semiconductive composition, an insulation layer comprising the polymer composition of the present invention, an outer semiconductive layer comprising a second semiconductive composition and optionally a jacketing. The insulation layer comprising the polymer composition of the present invention preferably has a thickness of more than 10 mm, preferably 10 to 50 mm, more preferably 12 to 40 mm, most preferably 15 to 25 mm.

In a preferred aspect of the invention, the cable for direct current (DC) or alternating current (AC) low, medium and/or high voltage power transmission or distribution comprises a conductor surrounded by an insulation layer of the polymer composition according to the present invention, preferably wherein at least one of the following features (a₁) to (a₃) is met:
(a₁) a conductive layer is located between the conductor and the inner surface of the insulation layer,
(a₂) a semi-conductive layer, preferably being located between the conductor and the inner surface of the insulation layer,
(a₃) a jacketing layer covers at least one of the preceding conductive layer, insulation layer and/or semi-conductive layer.
The semi-conductive layer a₂ may exhibit a conductivity of higher than 10⁻⁸ S/m, preferably higher than 10⁻⁴ S/m at 25°C.

The term "conductor" means herein that the conductor comprises one or more wires. Moreover, the cable may comprise one or more such conductors. Preferably the conductor is an electrical conductor and comprises one or more metal wires.
Another aspect of the invention relates to an electrical article comprising the cable according to the invention.

The present invention shall be described in more detail in the following Examples.

### Examples

In the following experiments, thermoplastic blend formulations (Example 1 and Comparative Examples 1 and 2) as well as several neat polymers (Comparative Examples 3 to 6) were analyzed by specific material parameters as described in details in the following.

Thermoplastic blend formulations comprising an isotactic propylene polymer (i-PP) and an ethylene-propylene copolymer were formulated by use of a lab twin-screw extruder. Based on these polymer compositions, plate samples (18x18 cm) of 1, 2 and 4 mm thickness were manufactured in a hot press.

Example 1: An isotactic propylene polymer (HC300BF^{®} from Borealis, i.e. i-PP with Melt Flow Rate (MFR) of 3.3 g/10min (ISO 1133)) was mixed with the ethylene-propylene copolymer according to the present invention (SC820CF^{®} from Borealis) in a weight ratio of 50:50.

The ethylene-propylene copolymer (SC820CF^{®} from Borealis) and the isotactic propylene polymer (HC300BF^{®} from Borealis) used in Example 1 were characterized as follows:
- The polymer architecture of SC820CF^{®} was proven by ¹³C-NMR (samples were dissolved in 1,2,4-trichloro benzene (TCB) und tetrachloro ethylene D6 (TCE-d6) and measured at 120 °C). For comparative purposes, the polymer architecture of Versify 2200^{®} and Versify 3000^{®} was also determined according to the above described method.
- The molecular weight of SC820CF^{®} was measured via high temperature gel permeation chromatography (HT-GPC) at 150 °C using 1,2,4-trichloro benzene (TCB) as eluent and polystyrene as calibration standards.
- The degrees of crystallinity of i-PP and SC820CF^{®} were determined as ratio of the measured melting enthalpy (via DSC) and the theoretical melting enthalpy of a perfect i-PP crystal (= 207.1 J/g).

The results of these tests are shown in Tables 1-3 below:

**Table 1: Polymer architecture via ¹³C-NMR**

| | | SC820CF^{®} | Versify 2200^{®} | Versify 3000^{®} |
|---|---|---|---|---|
| Overall ethylene (E) content | | 13% | 11% | 10% |
| Overall propylene (P) content | | 87% | 89% | 90% |
| Average propylene block length | | 8.2 | 11.5 | 12.5 |
| Average ethylene block length | | 1.2 | 1.6 | 2.0 |
| Distribution of triades | EPE | 7% | 2% | 1% |
| | PEP | 8% | 5% | 4% |

**Table 2: Molecular weight via GPC**

| | SC820CF^{®} |
|---|---|
| Mₙ [g/mol] | 67'800 |
| M_{w} [g/mol] | 222'000 |
| M_{z} [g/mol] | 535'000 |
| PD = Mw/Mn | 3.3 |

**Tabel 3: Crystallinity as determined by DSC**

| | (i-PP) | SC820CF^{®} |
|---|---|---|
| **Crystallinity** | 60% | 24% |

Comparative Example 1: An isotactic propylene polymer (HC300BF^{®} from Borealis, i.e. i-PP with Melt Flow Rate (MFR) of 3.3 g/10min (ISO 1133)) was mixed with a standard ethylene-propylene copolymer (Versify 2200^{®} from Dow) in a weight ratio of 70:30.

Comparative Example 2: An isotactic propylene polymer (HC300BF^{®} from Borealis, i.e. i-PP with Melt Flow Rate (MFR) of 3.3 g/10min (ISO 1133)) was mixed with a standard ethylene-propylene copolymer (Versify 3000^{®} from Dow) in a weight ratio of 70:30.

Comparative Example 3: An isotactic polypropylene (i-PP) HC300BF^{®} from Borealis was used. Comparative Example 3 does not fall under the subject-matter of the present invention due to the fact that no blend of an i-PP with an ethylene-propylene copolymer is used.

Comparative Example 4: A specific ethylene-propylene copolymer SC820CF^{®} from Borealis was used._Comparative Example 4 does not fall under the subject-matter of the present invention due to the fact that no blend of an i-PP with an ethylene-propylene copolymer is used.

Comparative Example 5: A standard ethylene-propylene copolymer Versify 2200^{®} from Dow was used. Comparative Example 5 does not fall under the subject-matter of the present invention due to the fact that no blend of an i-PP with an ethylene-propylene copolymer is used.

Comparative Example 6: A standard ethylene-propylene copolymer Versify 3000^{®} from Dow was used. Comparative Example 6 does not fall under the subject-matter of the present invention due to the fact that no blend of an i-PP with an ethylene-propylene copolymer is used.

The following tests were performed with regard to each of the plate samples obtained from the thermoplastic blend formulations (i.e. Example 1 and Comparative Examples 1 and 2) as well as with regard to plate samples obtained from neat polymers/copolymers (i.e. Comparative Examples 3 to 6):
- The morphology and phase separation occurrence in the blends were observed with visual inspection, polarized microscopy, atomic force microscopy (AFM) and scanning electron microscopy (SEM).
- Mechanical properties were determined by tensile tests at room temperature according to ISO 527-2.
- The melting / softening temperature was determined via thermal mechanical analysis (TMA) using a quartz probe with a flat tip (1 mm diameter) pressed on the sample with a constant load of 100 mN and a temperature rate of 1 K/min.
- DC conductivity was determined at 70 °C and 20 kV/mm on 1 mm thick plates.
- DC breakdown strength determined according to ASTM D149-87 on 0.1 mm thick plates and measured in silicone oil using a 100 kV HVDC source with a voltage ramping rate of 100 V/s.
- Space charge measurements were performed on 0.15 mm thickness samples using a PEANUTS pulsed electro-acoustic system (5-Lab) applying both a constant DC voltage to the sample as well as a 400 Hz / 600 V signal for the measurement of space charge and employing a PVDF sensor.

The results of these tests are shown in Tables 4-9 below:

**Table 4: Phase separation occurrence via AFM / SEM / optimized microscopy**

| **Material** | **Medium-fast cooling (> 1°C/min)** | **Slow cooling (<1°C/min)** |
|---|---|---|
| **Example 1** (i-PP / SC820CF^{®} with ratio 50:50) | no | no |
| **Comparative Example 1** (i-PP / Versify 2200^{®} with ratio 70:30) | yes | yes |
| **Comparative Example 2** (i-PP / Versify 3000^{®} with ratio 70:30) | yes | yes |
| **Comparative Example 3** (i-PP) | no | no |
| **Comparative Example 4** (SC820CF^{®}) | no | no |
| **Comparative Example 5** (Versify 2200^{®}) | yes | yes |
| **Comparative Example 6** (Versify 3000^{®}) | yes | yes |

**Table 5: Tensile properties**

| **Material** | **Young's modulus** |
|---|---|
| **Example 1** (i-PP / SC820CF^{®} with ratio 50:50) | 800 MPa |
| **Comparative Example 1** (i-PP / Versify 2200^{®} with ratio 70:30) | 600 MPa |
| **Comparative Example 2** (i-PP / Versify 3000^{®} with ratio 70:30) | 700 MPa |
| **Comparative Example 3** (i-PP) | 1500 MPa |
| **Comparative Example 4** (SC820CF^{®}) | 550 MPa |
| **Comparative Example 5** (Versify 2200^{®}) | 100 MPa |
| **Comparative Example 6** (Versify 3000^{®}) | 390 MPa |

**Table 6: Softening / melting temperature**

| **Material** | **Onset of softening** |
|---|---|
| **Example 1** (i-PP / SC820CF^{®} with ratio 50:50) | 168°C |
| **Comparative Example 1** (i-PP / Versify 2200^{®} with ratio 70:30) | 166°C |
| **Comparative Example 2** (i-PP / Versify 3000^{®} with ratio 70:30) | 166°C |
| **Comparative Example 3** (i-PP) | 168°C |
| **Comparative Example 4** (SC820CF^{®}) | 144°C |
| **Comparative Example 5** (Versify 2200^{®}) | 98°C |
| **Comparative Example 6** (Versify 3000^{®}) | 127°C |

**Table 7: DC conductivity on 1 mm plate samples**

| **Material** | **DC conductivity at 20 kV/mm - 70°C** |
|---|---|
| **Example 1** (i-PP / SC820CF^{®} with ratio 50:50) | 4 fS/m |
| **Comparative Example 1** (i-PP / Versify 2200^{®} with ratio 70:30) | Not measurable - breakdown occurred |
| **Comparative** Example 2 (i-PP / Versify 3000^{®} with ratio 70:30) | Not measurable - breakdown occurred |
| **Comparative Example 3** (i-PP) | 2 fS/m |
| **Comparative Example 4** (SC820CF^{®}) | 3 fS/m |
| **Comparative Example 6** (Versify 3000^{®}) | Not measurable - breakdown occurred |

**Table 8: DC breakdown strength on 0.1 mm plate samples**

| **Material** | **Cooling** | **Eo (kV/mm)** | **β** |
|---|---|---|---|
| **Example 1** (i-PP / SC820CF^{®} with ratio 50:50) | Fast | 439 | 5.1 |
| | Medium | 476 | 3.8 |
| | Slow | 462 | 7.3 |
| **Comparative Example 1** (i-PP / Versify 2200^{®} with ratio 70:30) | Fast | 333 | 12.3 |
| | Medium | 340 | 14.7 |
| | Slow | 346 | 9.2 |
| **Comparative Example 2** (i-PP / Versify 3000^{®} with ratio 70:30) | not measurable | | |
| **Comparative Example 3** (i-PP) | Fast | 394 | 5.8 |
| | Medium | 425 | 6.2 |
| | Slow | 446 | 8.5 |
| **Comparative Example 4** (SC820CF^{®}) | Fast | 434 | 10.7 |
| | Medium | 454 | 7.4 |
| | Slow | 466 | 7.3 |
| **Comparative Example 5** (Versify 2200^{®}) | Fast | 311 | 8.1 |
| | Medium | 321 | 8.7 |
| | Slow | 327 | 5.7 |
| **Comparative Example 6** (Versify 3000^{®}) | Fast | 185 | 7.0 |
| | Medium | 192 | 6.8 |
| | Slow | 198 | 6.5 |

**Table 9: Space charge**

| **Material** | **Evaluation** |
|---|---|
| **Example 1** (i-PP / SC820CF^{®} with ratio 50:50) | Good space charge behaviour: Homo-charge, little charge storage, fast charge decay |
| **Comparative Example 1** (i-PP / Versify 2200^{®} with ratio 70:30) | Bad space charge behaviour: Homo-charge, but substantial evidence of a negative charge being stored within the bulk |
| **Comparative Example 2** (i-PP / Versify 3000^{®} with ratio 70:30) | not available |
| **Comparative Example 3** (i-PP) | Good space charge behaviour: Homo-charge, little charge storage, fast charge decay |
| **Comparative Example 4** (SC820CF^{®}) | Good space charge behaviour: Homo-charge, little charge storage, fast charge decay |
| **Comparative Example 5** (Versify 2200^{®}) | Bad space charge behaviour: Significant positive hetero-charge storage adjacent to the cathode and tendency to store positive charge in the bulk of the sample |
| **Comparative Example 6** (Versify 3000^{®}) | not available |

### Results:

The specific polymer compositions according to the present invention (Example 1) show no phase separation and therefore a highly homogenous distribution which is explained in more detail in the description above. Moreover, specific polymer compositions according to the present invention show low elastic modulus of < 1000 MPa and therefore sufficient elasticity with no expected plastic deformation and material yielding (linear elasticity limit of 6-8 %). At the same time - even with such high flexibility - polymer compositions according to the present invention exhibit high melting temperature of > 165 °C (similar to pure i-PP) and therefore high thermal form-stability. Furthermore, polymer compositions according to the present invention exhibit high DC breakdown strength of > 400 kV/mm due to the prevention of phase separation, as well as very low conductivity of < 20 fS/m due to unneeded additives and therefore the absence of polar species as it is the case for cross-linked polyethylene.

In view of the above, the polymer composition according to the present invention stands out with superior mechanical and electrical properties, such as high thermal form-stability and mechanical flexibility, as well as low conductivity and high electric breakdown strength and is highly usable for insulation of electric cables, in particular HV cables, in particular for HV DC cables.

## Claims

1. Polymer composition comprising
- an ethylene-propylene copolymer comprising from 70 to 90% by weight propylene and from 10 to 30% by weight ethylene, based on the total weight of the ethylene-propylene copolymer, and
- an isotactic propylene homopolymer, wherein
the weight ratio of the ethylene-propylene copolymer to the isotactic propylene homopolymer ranges from 90: 10 to 10:90, wherein
the polymer composition has a softening temperature according to the Vicat method based on ASTM-D1525 of more than 140°C and a Young's modulus determined according to ISO 527-2 of less than 1200 MPa, and wherein
the polymer composition has DC electrical breakdown strength at room temperature determined according to ASTM D149-87 of higher than 350 kV/mm, and
wherein the ethylene-propylene copolymer has an average ethylene block length of 1.0 to 1.5 monomer units, and the ethylene-propylene copolymer has an average propylene block length of 5.0 to 10.0 monomer units.

2. Polymer composition according to claim 1 wherein the following is fulfilled:
the polymer composition shows no phase separation occurrence determined via visual inspection, polarized microscopy, atomic force microscopy (AFM) and scanning electron microscopy (SEM).

3. Polymer composition according to any one of the preceding claims, wherein the polymer composition further contains one or more additives selected from filler material, wetting/dispersing agent, plasticizer, antioxidant, light absorber, further additive(s), preferably less than 25% by weight based on the total weight of the polymer composition.

4. Polymer composition according to any one of the preceding claims, wherein the ethylene-propylene copolymer has a proportion of propylene-propylene diades of 60% to 79% based on the total number of diades present in the copolymer.

5. Polymer composition according to any one of the preceding claims, wherein the ethylene-propylene copolymer has a proportion of ethylene-propylene-ethylene triades of 4% to 20% based on the total number of triades present in the copolymer.

6. Method for producing a polymer composition according to any of claims 1-5, comprising the steps of
i) mixing
- an ethylene-propylene copolymer comprising from 70 to 90% by weight propylene and from 10 to 30% by weight ethylene, based on the total weight of the ethylene-propylene copolymer,
- an isotactic propylene homopolymer, and
- optionally further additives,
in a weight ratio of the ethylene-propylene copolymer to the isotactic propylene homopolymer ranging from 90:10 to 10:90,
at an elevated temperature, preferably at about 190 to 230°C, and
ii) cooling the mixture obtained from step i) at a cooling rate of lower than 10°C/min, preferably lower than 1°C/min.

7. A cable for direct current (DC) or alternating current (AC) medium and/or high voltage power transmission or distribution comprising a conductor surrounded by an insulation layer of the polymer composition according to any of the preceding claims 1 to 5.

8. A cable according claim 7, wherein at least one of the following features (a₁) to (a₃) is met:
(a₁) a conductive layer is located between the conductor and the inner surface of the insulation layer,
(a₂) a semi-conductive layer is present in the cable,
(a₃) a jacketing layer covers at least one of the conductive layer, insulation layer and/or semi-conductive layer.

9. Cable according to claim 7 or 8, wherein the insulation layer has a thickness of more than 10 mm.

10. Use of the polymer composition according to any one of the claims 1 to 5 as an insulating material for an electrical component.

11. Insulating material for electrical articles comprising the polymer composition according to any one of claims 1 to 5.

12. Electrical article comprising the polymer composition according to any one of claims 1 to 5.

13. Electrical article comprising the cable according to claims 7 to 9.

14. (Semi-)conductive polymer composition comprising a material according to claims 1 to 5 and conductive fillers such as carbon black exhibiting a conductivity of (at 25 °C) higher than 10⁵ S/m, preferably higher than 10⁶ S/m, the conductivity being determined as a steady state conductivity (DC) on 1 mm thick plates at 70°C and 20 kV/mm DC after at least 80 hours and being temperature compensated to 25 °C.

15. Cable according to any one of claims 7 to 9, wherein the semi-conductive layer is in accordance with claim 14.

## Patentansprüche

1. Polymerzusammensetzung, umfassend
- ein Ethylen-Propylen-Copolymer, umfassend 70 bis 90 Gew.-% Propylen und 10 bis 30 Gew.-% Ethylen, basierend auf dem Gesamtgewicht des Ethylen-Propylen-Copolymers, und
- ein isotaktisches Propylen-Homopolymer, wobei das Gewichtsverhältnis des Ethylen-Propylen-Copolymers zum isotaktischen Propylen-Homopolymer im Bereich von 90:10 bis 10:90 liegt, wobei
die Polymerzusammensetzung eine Erweichungstemperatur gemäß dem Vicat-Verfahren basierend auf der ASTM-D1525 von mehr als 140°C und einem nach ISO 527-2 bestimmten Elastizitätsmodul von weniger als 1200 MPa aufweist, und wobei
die Polymerzusammensetzung eine elektrische Gleichstrom-Durchschlagsfestigkeit bei Raumtemperatur, bestimmt gemäß der ASTM D149-87, von mehr als 350 kV/mm aufweist, und
wobei das Ethylen-Propylen-Copolymer eine durchschnittliche Ethylen-Blocklänge von 1,0 bis 1,5 Monomereinheiten und das Ethylen-Propylen-Copolymer eine durchschnittliche Propylen-Blocklänge von 5,0 bis 10,0 Monomereinheiten aufweist.

2. Polymerzusammensetzung nach Anspruch 1, wobei die folgenden Bedingungen erfüllt sind:
die Polymerzusammensetzung weist keine Phasentrennung auf, was durch Sichtprüfung, Polarisationsmikroskopie, Rasterkraftmikroskopie (AFM) und Rasterelektronenmikroskopie (SEM) bestimmt wurde.

3. Polymerzusammensetzung nach einem der vorhergehenden Ansprüche, wobei die Polymerzusammensetzung ferner ein oder mehrere Zusatzstoffe enthält, ausgewählt aus Füllstoff, Benetzungs-/Dispergiermittel, Weichmacher, Antioxidationsmittel, Lichtabsorber, weitere(r) Zusatzstoff(e), vorzugsweise weniger als 25 Gew.-%, basierend auf dem Gesamtgewicht der Polymerzusammensetzung.

4. Polymerzusammensetzung nach einem der vorhergehenden Ansprüche, wobei das Ethylen-Propylen-Copolymer einen Anteil an Propylen-Propylen-Diaden von 60 % bis 79 %, basierend auf der Gesamtzahl der im Copolymer vorhandenen Diaden, aufweist.

5. Polymerzusammensetzung nach einem der vorhergehenden Ansprüche, wobei das Ethylen-Propylen-Copolymer einen Anteil an Ethylen-Propylen-Ethylen-Triaden von 4 % bis 20 %, basierend auf der Gesamtzahl der im Copolymer vorhandenen Triaden, aufweist.

6. Verfahren zur Herstellung einer Polymerzusammensetzung nach einem der Ansprüche 1-5, umfassend die Schritte
i) Mischen
- eines Ethylen-Propylen-Copolymers, umfassend 70 bis 90 Gew.-% Propylen und 10 bis 30 Gew.-% Ethylen, basierend auf dem Gesamtgewicht des Ethylen-Propylen-Copolymers,
- eines isotaktischen Propylen-Homopolymers, und
- optional weiterer Zusatzstoffe,
in einem Gewichtsverhältnis des Ethylen-Propylen-Copolymers zum isotaktischen Propylen-Homopolymer, das im Bereich von 90:10 bis 10:90 liegt,
bei erhöhter Temperatur, vorzugsweise bei etwa 190 bis 230°C, und
ii) Abkühlen der in Schritt i) erhaltenen Mischung mit einer Abkühlgeschwindigkeit von weniger als 10°C/min, vorzugsweise weniger als 1°C/min.

7. Kabel zur Gleichstrom-(DC-) oder Wechselstrom-(AC-) Mittel- und/oder Hochspannungs-Energieübertragung oder
- verteilung, umfassend einen Leiter, der von einer Isolierschicht aus der Polymerzusammensetzung nach einem der vorhergehenden Ansprüche 1 bis 5 umgeben ist.

8. Kabel nach Anspruch 7, wobei mindestens eines der folgenden Merkmale (a₁) bis (a₃) erfüllt ist:
(a₁) eine leitende Schicht befindet sich zwischen dem Leiter und der Innenfläche der Isolierschicht,
(a₂) eine halbleitende Schicht ist im Kabel vorhanden,
(a₃) eine Ummantelungsschicht bedeckt mindestens eine der leitenden Schicht, Isolierschicht und/oder halbleitenden Schicht.

9. Kabel nach Anspruch 7 oder 8, wobei die Isolierschicht eine Dicke von mehr als 10 mm aufweist.

10. Verwendung der Polymerzusammensetzung nach einem der Ansprüche 1 bis 5 als Isoliermaterial für eine elektrische Komponente.

11. Isoliermaterial für elektrische Gegenstände, umfassend die Polymerzusammensetzung nach einem der Ansprüche 1 bis 5.

12. Elektrischer Gegenstand, umfassend die Polymerzusammensetzung nach einem der Ansprüche 1 bis 5.

13. Elektrischer Gegenstand, umfassend ein Kabel nach den Ansprüchen 7 bis 9.

14. (Halb-)leitende Polymerzusammensetzung, umfassend ein Material nach den Ansprüchen 1 bis 5 und leitende Füllstoffe, wie etwa Russ, die eine Leitfähigkeit (bei 25°C) von mehr als 10⁵ S/m, vorzugsweise mehr als 10⁶ S/m, aufweisen, wobei die Leitfähigkeit als stationäre Leitfähigkeit (DC) an 1 mm dicken Platten bei 70°C und 20 kV/mm DC nach mindestens 80 Stunden bestimmt wird und auf 25°C temperaturkompensiert ist.

15. Kabel nach einem der Ansprüche 7 bis 9, wobei die halbleitende Schicht gemäß Anspruch 14 ist.

## Revendications

1. Composition polymère comprenant
- un copolymère éthylène-propylène comprenant de 70 à 90 % en poids de propylène et de 10 à 30 % en poids d'éthylène, sur la base du poids total du copolymère éthylène-propylène, et
- un homopolymère propylène isotactique, dans laquelle
le rapport de poids du copolymère éthylène-propylène sur l'homopolymère propylène isotactique est dans une plage de 90:10 à 10:90, dans laquelle
la composition polymère a une température de ramollissement selon la méthode de Vicat sur la base d'ASTM-D1525 de plus de 140°C et un module de Young déterminé selon ISO 527-2 de moins de 1200 MPa, et dans laquelle
la composition polymère a une résistance au claquage électrique CC à température ambiante déterminée selon ASTM D149-87 de plus de 350 kV/mm, et
dans laquelle le copolymère éthylène-propylène a une longueur de bloc d'éthylène moyenne de 1,0 à 1,5 unité de monomère, et le copolymère éthylène-propylène a une longueur de bloc de propylène moyenne de 5,0 à 10,0 unités de monomère.

2. Composition polymère selon la revendication 1, dans laquelle ce qui suit est satisfait :
la composition polymère ne présente aucune occurrence de séparation de phase déterminée par inspection visuelle, microscopie polarisée, microscopie à force atomique (AFM) et microscopie électronique à balayage (SEM) .

3. Composition polymère selon l'une quelconque des revendications précédentes, dans laquelle la composition polymère contient en outre un ou plusieurs additifs sélectionnés parmi matériau de charge, agent humidifiant/dispersant, plastifiant, antioxydant, absorbeur de lumière, autre(s) additif(s), de préférence à moins de 25 % en poids sur la base du poids total de la composition polymère.

4. Composition polymère selon l'une quelconque des revendications précédentes, dans laquelle le copolymère éthylène-propylène a une proportion de diades de propylène-propylène de 60 % à 79 % sur la base du nombre total de diades présentes dans le copolymère.

5. Composition polymère selon l'une quelconque des revendications précédentes, dans laquelle le copolymère éthylène-propylène a une proportion de triades éthylène-propylène-éthylène de 4 % à 20 % sur la base du nombre total de triades présentes dans le copolymère.

6. Procédé de production d'une composition polymère selon l'une quelconque des revendications 1 à 5, comprenant les étapes suivantes :
i) le mélange
- d'un copolymère éthylène-propylène comprenant de 70 à 90 % en poids de propylène et de 10 à 30 % en poids d'éthylène, sur la base du poids total du copolymère éthylène-propylène,
- d'un homopolymère de propylène isotactique, et
- facultativement d'autres additifs,
dans un rapport de poids du copolymère éthylène-propylène sur l'homopolymère de propylène isotactique dans une plage de 90:10 à 10:90,
à une température élevée, de préférence d'environ 190 à 230°C, et
ii) le refroidissement du mélange obtenu à l'étape i) à un taux de refroidissement inférieur à 10°C/mn, de préférence inférieur à 1°C/mn.

7. Câble pour milieu de courant continu (CC) ou de courant alternatif (CA) et/ou transmission ou distribution d'énergie haute tension comprenant un conducteur entouré d'une couche isolante de la composition polymère selon l'une quelconque des revendications 1 à 5.

8. Câble selon la revendication 7, dans lequel au moins l'une des caractéristiques (a₁) à (a₃) suivantes est satisfaite :
(a₁) une couche conductrice est située entre le conducteur et la surface intérieure de la couche isolante,
(a₂) une couche semi-conductrice est présente dans le câble,
(a₃) une couche de gainage recouvre au moins l'une de la couche conductrice, la couche isolante et/ou la couche semi-conductrice.

9. Câble selon la revendication 7 ou 8, dans lequel la couche isolante a une épaisseur de plus de 10 mm.

10. Utilisation de la composition polymère selon l'une quelconque des revendications 1 à 5 en tant que matériau isolant pour un composant électrique.

11. Matériau isolant pour articles électriques comprenant la composition polymère selon l'une quelconque des revendications 1 à 5.

12. Article électrique comprenant la composition polymère selon l'une quelconque des revendications 1 à 5.

13. Article électrique comprenant le câble selon les revendications 7 à 9.

14. Composition polymère (semi-)conductrice comprenant un matériau selon les revendications 1 à 5 et des charges conductrices comme du noir de carbone présentant une conductivité (à 25°C) supérieure à 10⁵ S/m, de préférence supérieure à 10⁶ S/m, la conductivité étant déterminée en tant qu'une conductivité d'état stable (CC) sur des plaques d'une épaisseur de 1 mm à 70°C et 20 kV/mm CC après au moins 80 heures et étant à une température compensée à 25°C.

15. Câble selon l'une quelconque des revendications 7 à 9, dans lequel la couche semi-conductrice est selon la revendication 14.
